# EUROPÄISCHE PATENTANMELDUNG

(11) **EP 2 463 344 A1**
(43) Veröffentlichungstag der Anmeldung: **13.06.2012**
(21) Anmeldenummer: 11009335.8
(22) Anmeldetag: 24.11.2011
(51) Int. Cl.: C09D 11/00, B41M 3/14

(54) **Verwendung eines polymeren Bindemittels**

(30) Priorität: 08.12.2010 DE 102010053682
(71) Anmelder: Giesecke & Devrient GmbH, 81607 München (DE)
(72) Erfinder: Mengel, Chrisoph Dr., 83607 Holzkirchen (DE); Bornschlegl, Alexander Dr., 81735 München (DE)

(57) **Zusammenfassung**

Die Erfindung betrifft die Verwendung eines polymeren Bindemittels als ultraviolette (UV) Strahlung absorbierender Bestandteil in einer Zusammensetzung, die gegenüber UV-Strahlung empfindliche, optisch variable Farbmittel als Sicherheitsmerkmal aufweist.

Die Erfindung betrifft ferner eine entsprechende Zusammensetzung sowie ein Verfahren zur Herstellung einer solchen Zusammensetzung und Sicherheitselemente oder Wertdokumente mit einer erfindungsgemäßen Zusammensetzung.

## Beschreibung

Die Erfindung betrifft die Verwendung eines polymeren Bindemittels in einer Zusammensetzung, die gegenüber ultravioletter (UV) Strahlung empfindliche, optisch variable Farbmittel als Sicherheitsmerkmal aufweist.

Die Erfindung betrifft ferner eine Zusammensetzung, umfassend ein gegenüber ultravioletter (UV) Strahlung empfindliches, optisch variables Farbmittel als Sicherheitsmerkmal und ein polymeres Bindemittel, sowie ein Verfahren zur Herstellung einer solchen Zusammensetzung. Die Erfindung betrifft ferner eine Sicherheitselement oder Wertdokument, insbesondere eine Banknote, mit einer solchen Zusammensetzung.

Zum Schutz gegen Nachahmung, insbesondere mit Farbkopierern oder anderen Reproduktionsverfahren, werden Wertdokumente, wie beispielsweise Banknoten oder Karten, mit optisch variablen Sicherheitselementen ausgestattet. Der Fälschungsschutz beruht dabei darauf, dass der visuell und einfach und deutlich erkennbare, optisch variable Effekt von den oben genannten Reproduktionsgeräten nicht oder nur ungenügend wiedergegeben wird.

Ein effektiver Schutz gegen Nachahmung kann dabei mittels optisch variabler Sicherheitselemente erfolgen, bei denen der optisch variable Effekt auf ein Sicherheitsmerkmal in Form eines optisch variablen Farbmittels zurückzuführen ist. Beispielsweise sind thermochrome oder photochrome Pigmente bekannt, die als optisch variables Sicherheitsmerkmal in einer Zusammensetzung enthalten sind, und nach Aufbringung einer solchen Zusammensetzung auf das Substrat eines Wertdokuments ein optisch variables Sicherheitselement bilden, das bei Beaufschlagung mit einer geeigneten Wärmestrahlung bzw. elektromagnetischer Strahlung des sichtbaren Wellenlängenbereichs für den Betrachter einen optischen Eindruck hervorruft, der sich von dem optischen Eindruck vor Beaufschlagung mit der jeweiligen Strahlung unterscheidet. Der Begriff "optisch variabel" umfasst im Rahmen der vorliegenden Erfindung dabei jede von einem Betrachter wahrnehmbare Veränderung des optischen Eindrucks eines Farbmittels, Sicherheitsmerkmals oder eines Sicherheitselements. Sehr häufig wird es sich bei der vom Betrachter wahrnehmbaren Veränderung um eine Farb-, Helligkeits- oder Kontraständerung handeln.

Insbesondere die vorstehend genannten Beispiele für optisch variable Farbmittel können eine erhebliche Empfindlichkeit gegenüber UV-Strahlung aufweisen. Im Weiteren wird unter "UV-Strahlung" eine elektromagnetische Strahlung im Wellenlängenbereich von weniger als 380 nm verstanden, während der Wellenlängenbereich von 380 nm bis ca. 780 nm als "sichtbarer Wellenlängenbereich" aufgefasst wird. Da die Sicherheitselemente mit gegenüber UV-Strahlung empfindlichen, optisch variablen Farbmitteln, wie bereits erwähnt, beispielsweise in Banknoten oder Karten Verwendung finden, die für den Umlauf bestimmt sind, können diese Dokumente bzw. Sicherheitselemente beispielsweise Tageslicht ausgesetzt sein. Da Tageslicht in gewissem Umfang auch UV-Strahlung im Wellenlängenbereich von weniger als 380 nm aufweist, UV-Strahlung aber besonders energiereich ist, sind Sicherheitselemente bzw. Wertdokumente mit gegenüber UV-Strahlung empfindlichen, optisch variablen Farbmitteln nicht besonders lichtecht, d.h. die Farbmittel sind nicht sehr beständig gegen UV-Strahlung und verändern z.B. ihre Farbe.

Durch UV-Strahlung kann somit ein UV-Strahlung empfindliches, optisch variables Farbmittel in seiner Funktionsweise beeinträchtigt bzw. das Farbmittel im schlimmsten Fall gänzlich zerstört werden, wodurch das Sicherheitselement bzw. Wertdokument mit einem solchen Sicherheitsmerkmal in nachteiliger Weise an Fälschungssicherheit verliert oder aber die Fälschungssicherheit im schlimmsten Fall in Bezug auf das optisch variable Farbmittel gänzlich einbüßt. Im Rahmen der vorliegenden Erfindung wird unter einem gegenüber UV-Strahlung "empfindlichen" Farbmittel ein Farbmittel verstanden, das in irgendeiner Weise durch das Einwirken von UV-Strahlung in seiner Funktion als optisch variables Farbmittel beeinträchtigt wird, z.B. durch eine unerwünschte und dauerhafte Farbveränderung oder durch Zerstörung des optisch variablen Effekts des Farbmittels.

Aus dem Stand der Technik sind Maßnahmen bekannt, die Lichtechtheit von Zusammensetzungen mit gegenüber UV-Strahlung empfindlichen, optisch variablen Farbmitteln als Sicherheitsmerkmal zu verbessern. Dazu wurden beispielsweise organische oder anorganische UV-Absorber, z.B. Benzotriazole, einer solchen Zusammensetzung beigemischt. Die dadurch erzielte Verbesserung der Lichtechtheit ist aber begrenzt, da nur geringe Anteile an UV-Absorbern der Zusammensetzung beigemischt werden können, ohne die chemischen und physikalischen Eigenschaften der Rezeptur nachteilig zu beeinflussen.

Eine weitere Möglichkeit zur Verbesserung der Lichtechtheit von Zusammensetzungen mit gegen UV-Strahlung empfindlichen, optisch variablen Farbmitteln besteht in dem Zusatz von anorganischen UV-Absorbern, die UV-Strahlung absorbieren bzw. diffus streuen. Zwar kann mit solchen UV-Absorbern die Lichtechtheit der Zusammensetzung in einem gewissem Umfang verbessert werden, gleichzeitig führt aber die Opazität der zugesetzten Materialien schon bei einem relativ geringem Anteil in der Zusammensetzung zur einer erheblichen Beeinträchtigung der optischen Qualität der Zusammensetzung, was sich z.B. dadurch negativ auf die Fälschungssicherheit der Zusammensetzung auswirkt, dass das als Sicherheitsmerkmal eingesetzte optisch variable Farbmittel von einem Betrachter aufgrund der Opazität der anorganischen UV-Absorber nicht mehr im erforderlichen Maße wahrgenommen werden kann.

Der Erfindung liegt deshalb die Aufgabe zugrunde, die Nachteile des Standes der Technik zu beheben und den Schutz gegenüber Fälschungen durch ein optisch variables Farbmittel während der gesamten Einsatzzeit des Farbmittels in einer Zusammensetzung, einem Sicherheitselement bzw. in einem Wertdokument sicherzustellen.

Diese Aufgabe wird durch die Merkmale der unabhängigen Ansprüche gelöst. Weiterbildungen der Erfindung sind Gegenstand der abhängigen Ansprüche.

Erfindungsgemäß ist zur Lösung der Aufgabe vorgesehen, dass in einer Zusammensetzung, die gegenüber UV-Strahlung empfindliche, optisch variable Farbmittel als Sicherheitsmerkmal aufweist, ein polymeres Bindemittel als UV-Strahlung absorbierender Bestandteil verwendet wird. Überraschenderweise wurde nämlich durch die Erfinder festgestellt, dass bestimmte polymere Bindemittel in einer Zusammensetzung mit gegenüber UV-Strahlung empfindlichen, optisch variablen Farbmitteln auch als UV-Strahlung absorbierender Bestandteil eingesetzt werden können. Im Rahmen der vorliegenden Erfindung gelten solche polymeren Bindemittel als UV-Absorber oder UV-Strahlung absorbierender Bestandteil, die UV-Strahlung (mit einer Wellenlänge kleiner 380 nm) zumindest teilweise, bevorzugt in erheblichem Maße absorbieren oder reflektieren und damit eine Beaufschlagung der gegenüber UV-Strahlung empfindlichen Farbmittel mit UV-Strahlung im Wesentlichen verhindern. Idealerweise würde ein erfindungsgemäßer UV-Absorber UV-Strahlung im Wesentlichen vollständig absorbieren, was in der Praxis aber in der Regel nicht erreicht werden wird.

Im Rahmen der vorliegenden Erfindung werden unter einem Bindemittel in Übereinstimmung mit der unter "http://de.wikipedia.org/wiki/Bindemittel" gegebenen Definition Stoffe verstanden, durch die Feststoffe mit einem feinen Zerteilungsgrad, z.B. Pulver, miteinander verklebt werden. Demzufolge dienen Bindemittel in Zusammensetzungen, die gegenüber UV-Strahlung empfindliche, optisch variable Farbmittel als Sicherheitsmerkmal aufweisen, insbesondere zum Verkleben dieser Farbmittel miteinander. Sofern die Zusammensetzung weitere Stoffe, wie z.B. Füllstoffe, aufweist, dienen die Bindemittel zum Verkleben sämtlicher in der Zusammensetzung enthaltenen Stoffe.

Die erfindungsgemäßen polymeren Bindemittel, die in der Zusammensetzung als Bindemittel und zugleich als UV-Strahlung absorbierender Bestandteil enthalten sind, können das einzige Bindemittel oder eines unter mehreren Bindemitteln der Zusammensetzung sein. Sofern die Zusammensetzung mehrere Bindemittel aufweist, können die polymeren Bindemittel auch als eine Bindemittelkomponente der Zusammensetzung aufgefasst werden.

Dadurch, dass polymere Bindemittel erfindungsgemäß als Bindemittel und zugleich als UV-Strahlung absorbierende Bestandteile in einer Zusammensetzung mit gegenüber UV-Strahlung empfindlichen, optisch variablen Farbmitteln verwenden werden, lassen sich die bisherigen Nachteile des Standes der Technik, wie sie der weiter oben beschriebene Einsatz organischer oder anorganischer Zusatzstoffe mit sich bringt, elegant vermeiden. Denn durch die Verwendung bestimmter polymerer Bindemittel als UV-Absorber können die für die Zusammensetzung gewünschten chemischen Eigenschaften eingestellt werden, ohne dass es durch die zusätzliche Vorsehung von organischen oder anorganischen Absorbern in der Zusammensetzung zu einer Beeinträchtigung der optischen Eigenschaften der Zusammensetzung kommt.

Auch resultiert die Verwendung eines polymeren Bindemittels als UV-Absorber in einer Zusammensetzung mit einem gegen UV-Strahlung empfindlichen, optisch variablen Farbmittel als Sicherheitsmerkmal in einer erhöhten Fälschungssicherheit, da die Beständigkeit gegenüber UV-Strahlung erhöht wird. Somit zeichnet sich eine solche Zusammensetzung durch eine erhöhte Lichtechtheit und letztlich eine erhöhte Fälschungssicherheit aus, da das das Sicherheitsmerkmal bildende optisch variable Farbmittel länger als dies aus dem Stand der Technik bekannt ist, seine Funktion zur Überprüfung der Echtheit der Zusammensetzung, des Sicherheitselements bzw. des Wertdokuments behält.

In einer vorteilhaften Weiterbildung ist vorgesehen, dass der UV-Strahlung absorbierende Bestandteil ausgewählt ist aus Polyvinylbutyral (PVB) oder Polyvinylacetalen, bevorzugt den aromatischen Polyvinylacetalen, insbesondere Phenylacetaldehyd. Polyvinylbutyral und die Klasse der Polyvinylacetale zeichnen sich dadurch aus, dass sie die Doppelfunktion als Bindemittel mit guten Bindemitteleigenschaften und als UV-Absorber mit starker UV-Absorption in gleichem Maße erfüllen. PVB zeichnet sich insbesondere auch dadurch aus, dass die erfindungsgemäß gewünschte UV-Absorption in hohem Maß gegeben ist, gleichzeitig aber die Absorption im sichtbaren Wellenlängenbereich oberhalb von 380 nm wegen einer steilen Absorptionskante bei ca. 380 nm relativ gering ist, und dadurch PVB in verhältnismäßig großen Konzentrationen der Zusammensetzung zugesetzt werden kann, ohne dass die optischen Eigenschaften der Zusammensetzung wesentlich beeinträchtigt werden. Ein weiterer Vorteil von PVB besteht in der guten Verfügbarkeit und in seiner Einstufung als Menschen und Umwelt nicht gefährdender Stoff.

Aber auch die Polyvinylacetale, insbesondere die aromatischen Polyvinylacetale, wie z.B. Phenylacetaldehyd, zeichnen sich durch eine sehr gute UV-Absorption aus. Sofern die bevorzugten Polyvinylacetale auch im sichtbaren Wellenlängenbereich absorbieren, kann dies für die gewünschte resultierende Farbe der Zusammensetzung berücksichtigt werden.

Besonders bevorzugt ist die Verwendung des UV-Strahlung absorbierenden Bestandteils in der Zusammensetzung mit einem Anteil von 5 Gew.-% bis 95 Gew.-%, bevorzugt 20 Gew.-% bis 80 Gew.-%, und ganz besonders bevorzugt von 35 % Gew.-% bis 55 Gew.-%. Der UV-Absorber kann erfindungsgemäß in einem relativ hohen Anteil in der Zusammensetzung enthalten sein, was z.B. bei Verwendung des UV-Absorbers als einziges Bindemittel der Zusammensetzung der Fall sein wird. Werden neben dem als UV-Absorber eingesetzten polymeren Bindemittel noch weitere Bindemittel eingesetzt, kann der Anteil in der Zusammensetzung entsprechend niedriger gewählt werden.

Erfindungsgemäß ist ferner eine Verwendung bevorzugt, bei der das gegenüber UV-Strahlung empfindliche, optisch variable Farbmittel ausgewählt ist aus der Gruppe der optisch variablen Farbstoffe oder der optisch variablen Pigmente. Farbmittel im Sinne der Erfindung sind demnach zum einen Farbstoffe, d.h. in Lösungsmitteln und/oder Bindemitteln lösliche Farbmittel, sowie zum anderen Pigmente, d.h. im Anwendungsmedium praktisch unlösliche Farbmittel. Aus der Klasse der optisch variablen Pigmente als Farbmittel sind thermochrome, photochrome Pigmente oder Fluoreszenzpigmente ganz besonders bevorzugt, da die erfindungsgemäße Verwendung der polymeren Bindemittel als UV-Absorber hier besonders eindrucksvolle Ergebnisse liefert, d.h. durch die Erfindung die Lichtechtheit der Zusammensetzungen mit thermochromen, photochromen Pigmenten oder Fluoreszenzpigmenten in besonderem Maße erhöht wird. Der Grund dafür ist darin zu sehen, dass thermochrome, photochrome Pigmente oder Fluoreszenzpigmente in besonderem Maße empfindlich gegen UV-Strahlung sind und UV-Absorber in einer solchen Zusammensetzung die Stabilität und Lichtechtheit solcher Pigmente in besonderem Maße sicherstellen.

Bei den thermochromen Pigmenten kann es sich mit Vorteil um mikroverkapselte thermochrome Flüssigkristalle handeln. Ein mikroverkapselter Flüssigkristall zeichnet sich dadurch aus, dass er eine temperaturabhängige Farbreflektionscharakteristik aufweist: ab einer gewissen Auslösetemperatur reflektieren die Kapseln sichtbares Licht einer bestimmten zirkularen Polarisationsrichtung. Mit zunehmender Temperatur verschiebt sich diese Reflektion vom langwelligen in den kurzwelligen Bereich. Damit erhält man oberhalb der Auslösetemperatur des Flüssigkristalls einen veränderten Farbkippeffekt. Bei den photochromen Pigmenten werden insbesondere Stoffe aus der Klasse der Fulgide, Fulgidiimide, Spiro-Dihydroindolizine, Spiro-Pyrane, Spiro-Oxazine, Chromene und Viologene verwendet. Die photochrome Eigenschaft (Phototropie) basiert auf einer Änderung des Absorptionsverhaltens des sichtbaren Lichts, wenn die Verbindung einer elektromagnetischen Strahlung vorgegebener Wellenlänge ausgesetzt wird. Das ursprüngliche Absorptionsspektrum stellt sich entweder nach einer bestimmten Zeit selbständig wieder ein, insbesondere im Dunkeln, oder kann durch Erwärmung wieder hergestellt werden. Auch photochrome Pigmente können mit Vorteil mikroverkapselt sein und somit als Kern-Hülle-Teilchen in einer erfindungsgemäßen Zusammensetzung enthalten sein.

Die Erfindung umfasst ferner eine Zusammensetzung mit einem gegenüber UV-Strahlung empfindlichen, optisch variablen Farbmittel als Sicherheitsmerkmal und einem polymeren Bindemittel, wobei das polymere Bindemittel ein UV-Strahlung absorbierender Bestandteil ist. Wie bereits erwähnt, ist der Kern der Erfindung darin zu sehen, dass bestimmte polymere Bindemittel sowohl als verklebender Bestandteil in der Zusammensetzung als auch als UV-Absorber eingesetzt werden können. Die sich daraus ergebenden Vorteile der Erfindung, insbesondere eine größere Lichtechtheit der erfindungsgemäßen Zusammensetzungen und somit ein guter Fälschungsschutz für Sicherheitselemente und Wertdokumente mit erfindungsgemäßer Zusammensetzung sowie lange Umlaufzeiten, werden zur Vermeidung von Wiederholungen hier nicht weiter vertieft.

Bevorzugt ist die Zusammensetzung dadurch gekennzeichnet, dass der UV-Strahlung absorbierende Bestandteil ausgewählt ist aus Polyvinylbutyral (PVB) oder Polyvinylacetalen, bevorzugt den aromatischen Polyvinylacetalen, insbesondere Phenylacetaldehyd. Ferner ist eine Zusammensetzung bevorzugt, bei der der Anteil des UV-Strahlung absorbierenden Bestandteils in der Zusammensetzung 5 Gew.-% bis 95 Gew.-%, bevorzugt 20 Gew.-% bis 80 Gew.-%, besonders bevorzugt 35 Gew.-% bis 55 Gew.-%, beträgt.

Auch ist eine Zusammensetzung bevorzugt, bei der das gegenüber UV-Strahlung empfindliche, optisch variable Farbmittel ausgewählt ist aus der Gruppe der optisch variablen Farbstoffe oder der optisch variablen Pigmente, insbesondere der thermochromen, photochromen Pigmente oder Fluoreszenzpigmente. Zur Vermeidung von Wiederholungen bezüglich der bevorzugten optisch variablen Farbmittel, der bevorzugten Anteile des UV-Strahlung absorbierenden Bestandteils und der bevorzugten UV-Absorber sei auf die vorstehenden Ausführungen zur erfindungsgemäßen Verwendung verwiesen.

In einer vorteilhaften Erfindungsvariante ist vorgesehen, dass die Zusammensetzung den UV-Strahlung absorbierenden Bestandteil in im Wesentlichen homogener Verteilung aufweist. Dies hat den Vorteil, dass die Zusammensetzung mit dem optisch variablen Farbmittel und dem polymeren Bindemittel als UV-Absorber mit verhältnismäßig einfachen Mitteln hergestellt werden kann und aufgrund der im Wesentlichen homogenen Verteilung der UV-Absorber für die gesamte Zusammensetzung einen guten Schutz gegenüber UV-Strahlung bietet.

Alternativ oder zusätzlich zu einer homogenen Verteilung des UV-Strahlung absorbierenden Bestandteils kann dieser mit Vorteil in einer die optisch variablen Farbmittel umhüllenden Hülle einer Vielzahl von Kern-Hülle-Teilchen enthalten sein. Bei einer solchen Variante werden die optisch variablen Farbmittel zur Bildung einer Vielzahl von Kern-Hülle-Teilchen verkapselt, wobei die Hülle den UV-Strahlung absorbierenden Bestandteil aufweist. Auf diese Art und Weise sind die strahlungsempfindlichen Farbmittel quasi individuell von einer Schutzschicht aus UV-Absorbern umgeben, was die Lichtechtheit der Farbmittel auf besonders zuverlässige Weise sicherstellt. Ferner bietet diese Variante den Vorteil, dass die verkapselten Farbmittel mit hoher Lichtechtheit in der Zusammensetzung enthalten sind, die Zusammensetzung bezüglich der Wahl des oder der Bindemittel nicht eingeschränkt ist, da das als UV-Absorber fungierende polymere Bindemittel im Wesentlichen oder ausschließlich in der Hülle der Kern-Hülle-Teilchen vorgesehen ist.

Die Erfindung umfasst ferner ein Verfahren zur Herstellung einer Zusammensetzung mit einer Vielzahl von Kern-Hülle-Teilchen, bei dem
- zur Bildung der Hülle einer Vielzahl von Kern-Hülle-Teilchen ein gegenüber ultravioletter (UV) Strahlung empfindliches optisch variables Farbmittel mit einem Material umhüllt wird, das ein polymeres Bindemittel, bevorzugt ausgewählt aus Polyvinylbutyral (PVB) oder Polyvinylacetalen, als einen UV-Strahlung absorbierenden Bestandteil aufweist, und
- die Zusammensetzung unter Verwendung der so erhaltenen Kern-Hülle-Teilchen und gegebenenfalls weiterer Inhaltsstoffe hergestellt wird.

Wie bereits erwähnt, bietet die Vorsehung von Kern-Hülle-Teilchen mit optisch variablem Farbmittel als Kern und einer Hülle mit einem als UV-Absorber fungierenden Bindemittel den Vorteil, dass optisch variable Farbmittel mit großer Beständigkeit, insbesondere hoher Lichtechtheit, als fertige Komponente in die Zusammensetzung eingebracht werden können und die Zusammensetzung dann unter Hinzufügen weiterer Inhaltsstoffe fertig gestellt wird. Der in der Hülle der Kern-Hülle-Teilchen enthaltene UV-Absorber ist bevorzugt PVB oder ein Polyvinylacetal, insbesondere ein aromatisches Polyvinylacetal und ganz besonders bevorzugt Phenylacetaldehyd. Bei der Herstellung der Kern-Hülle-Teilchen kann der UV-Absorber dabei als ausschließlicher Bestandteil oder als eine Komponente der Hülle der Kern-Hülle-Teilchen vorgesehen sein.

Es versteht sich, dass die gegebenenfalls vorhandenen weiteren Inhaltsstoffe, wie Bindemittel, Füllstoffe oder Verdickungsmittel, in Abhängigkeit von der für die Zusammensetzung vorgesehenen Verwendung ausgewählt und in entsprechender Menge zur Bildung einer verarbeitungsfähigen erfindungsgemäßen Zusammensetzung vereint werden. Beispielsweise werden die Inhaltsstoffe und die Zusammensetzung einer erfindungsgemäßen Zusammensetzung abhängig von dem für die Applikation der Zusammensetzung vorgesehenen Druckverfahren entsprechend ausgewählt sein.

Denkbar ist des Weiteren auch eine Verfahrensvariante, bei der der UV-Strahlung absorbierende Bestandteil der Hülle der Kern-Hülle-Teilchen in-situ hergestellt wird, in dem
- das optisch variable Farbmittel mit einer Polyvinylalkohol (PVA) aufweisenden Hülle umhüllt wird, und
- durch Reaktion des PVA mit einem Aldehyd, bevorzugt Butanal, der UV-Strahlung absorbierende Bestandteil, bevorzugt PVB, in der Hülle der Kern-Hülle-Teilchen gebildet wird.

Eine solche In-situ-Herstellung ist insbesondere dann von Vorteil, wenn der UV-Absorber sich für eine direkte Verkapselung des Kerns der Kern-Hülle-Teilchen nicht so gut eignet. Für einen solchen Fall kann auf das an sich bewährte Verfahren zur Herstellung des UV-Absorbers aus PVA mit dem geeigneten Aldehyd ausgewichen werden.

In einer weiteren Verfahrensvariante ist vorgesehen, dass
- das optisch variable Farbmittel zunächst mit einem Funktionsmaterial, bevorzugt Gelatine oder Melaminharz, umhüllt wird, und
- das Funktionsmaterial anschließend mit dem Material umhüllt wird, das das polymere Bindemittel als einen UV-Strahlung absorbierenden Bestandteil aufweist.

Diese Ausführungsform des Verfahrens hat den Vorteil, dass die optisch variablen Farbmittel mit an sich gängigen Verfahren mit einem geeigneten Funktionsmaterial sicher umhüllt werden, gegebenenfalls gelagert werden und dann bei Bedarf mit einer Hülle mit einem UV-Strahlung absorbierenden Bestandteil versehen werden. Im Rahmen der vorliegenden Erfindung umfasst der Begriff "Hülle" demnach also auch eine aus mehreren Schichten aufgebaute Hülle. Im vorstehend beschriebenen Verfahren wird das optisch variable Farbmittel also zunächst mit einer ersten Hülle aus Funktionsmaterial und anschließend einer zweiten Hülle mit einem UV-Strahlung absorbierenden Bestandteil verkapselt. Die mit diesem speziellen Verfahren hergestellten Zusammensetzungen zeichnen sich durch eine sehr große Lichtechtheit der in der Zusammensetzung enthaltenen optisch variablen Farbmittel aus.

Die Erfindung umfasst ferner ein Sicherheitselement oder Wertdokument, insbesondere eine Banknote, umfassend eine auf einem Substrat angeordnete erfindungsgemäße Zusammensetzung bzw. eine erfindungsgemäß hergestellte Zusammensetzung.

Bei dem Wertdokument kann es sich insbesondere um eine Banknote, bevorzugt eine Papierbanknote, eine Polymerbanknote oder eine Folien-Papier-Verbundbanknote, handeln, oder um eine Ausweiskarte, wie etwa eine Kreditkarte, eine Bankkarte, eine Barzahlungskarte, eine Berechtigungskarte, einen Personalausweis, oder eine Pass-Personalisierungs-Seite handeln. Es versteht sich, dass diese Aufzählung von als Wertdokument geeigneten Datenträgern nicht abschließend ist.

Das erfindungsgemäße Sicherheitselement kann ferner auch zur Sicherung von Produkten jeglicher Art, also zur sogenannten "Produktsicherung" verwendet werden. Beispielsweise können mit dem erfindungsgemäßen Sicherheitselement Verpackungen, z.B. Arzneimittelverpackungen, insbesondere Faltschachteln, gegen Nachahmung geschützt werden. Neben dem Produktschutz kann das erfindungsgemäße Sicherheitselement auch für den Markenschutz mit Vorteil verwendet werden.

Das Substrat des Sicherheitselements kann dabei wie bei dem Wertdokument ausgebildet sein, d.h. bei dem Substrat kann es sich insbesondere um Papier, bevorzugt um Baumwollpapier oder ein Papier mit einem polymeren Anteil x in Bereichen 0 < x < 100 Gew.-%, handeln, oder aber um ein Polymersubstrat, das ein- oder mehrschichtig ausgebildet ist.

Erfindungsgemäß ist ein Sicherheitselement oder Wertdokument dabei besonders bevorzugt, das den UV-Strahlung absorbierenden Bestandteil der Zusammensetzung zumindest teilweise in einer Oberflächenschicht der Zusammensetzung aufweist. Unter einer "Oberflächenschicht" wird im Rahmen der vorliegenden Erfindung dabei jede Schicht verstanden, welche eine Oberfläche des Sicherheitselements oder Wertdokuments im Bereich der erfindungsgemäßen Zusammensetzung bildet. Eine Oberflächenschicht wird also insbesondere dadurch realisiert, dass der UV-Absorber teilweise in einer die Oberfläche des Sicherheitselements bildenden Schicht der Zusammensetzung und teilweise in einer darunterliegenden Schicht der Zusammensetzung vorgesehen ist.

Ganz besonders bevorzugt ist allerdings eine Ausführungsform, bei der der UV-Absorber ausschließlich in der Oberflächenschicht der Zusammensetzung enthalten ist und in der darunterliegenden Schicht der Zusammensetzung die optisch variablen Farbmittel enthalten sind. Eine solche Ausführungsform eignet sich insbesondere auch gut für eine nachträgliche Aufbringung einer den UV-Strahlung absorbierenden Bestandteil aufweisenden Oberflächenschicht auf eine Zusammensetzung mit den gegenüber UV-Strahlung empfindlichen, optisch variablen Farbmitteln. Beispielsweise kann die Oberflächenschicht nachträglich als UV-Schutzschicht auf eine Zusammensetzung mit gegenüber UV-Strahlung empfindlichem, optisch variablem Farbmittel aufgebracht, insbesondere aufgedruckt werden. Auf diese Art und Weise wird ein Sicherheitselement bzw. Wertdokument mit optisch variablen Farbmittel erhalten, das einerseits gut gegen UV-Strahlung geschützt ist und andererseits den UV-Schutz durch eine nachträgliche Aufbringung des UV-Absorbers auf die die Farbmittel enthaltende Zusammensetzung ermöglicht.

Nachfolgend wird die Erfindung anhand der begleitenden Figuren erläutert. Die verschiedenen Ausführungsbeispiele sind dabei nicht auf die Verwendung der konkret beschriebenen Form beschränkt, sondern können auch untereinander kombiniert werden. Es zeigen:
- Fig.1: eine schematische Darstellung einer Banknote mit einem erfindungsgemäßen Sicherheitselement,
- Fig. 2: schematisch ein Sicherheitselement nach einem Ausführungsbeispiel der Erfindung im Querschnitt,
- Fig. 3.: schematisch die Herstellung eines in einer erfindungsgemäßen Zusammensetzung enthaltenen Kern-Hülle-Teilchens mit einem UV-Strahlung absorbierendem Bestandteil in der Hülle, und
- Fig. 4: schematisch die Herstellung eines in einer erfindungsgemäßen Zusammensetzung enthaltenen Kern-Hülle-Teilchens nach einem weiteren Ausführungsbeispiel der Erfindung.

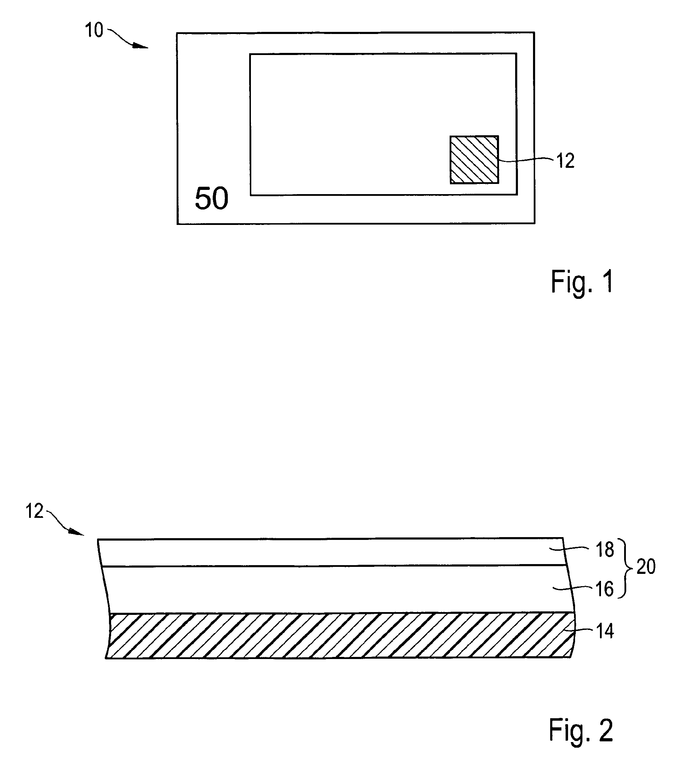

Fig.1 zeigt ein Wertdokument, hier am Beispiel einer Banknote 10, welche mit einem Sicherheitselement 12 ausgestattet ist. Es versteht sich, dass solche Wertdokumente zusätzlich zu dem Sicherheitselement 12 weitere nicht dargestellte Sicherheitselemente, wie z.B. Sicherheitsdrucke, Hologramme, Beugungsstrukturen etc., aufweisen können.

Das Sicherheitselement 12 der Fig. 1 ist in die Banknote integriert, d.h. eine erfindungsgemäße Zusammensetzung wurde auf dem Banknotensubstrat aufgebracht.

Fig. 2 zeigt das Sicherheitselement 12 der Fig.1 im Querschnitt. Aus der Querschnittsdarstellung ist zu erkennen, dass die erfindungsgemäße Zusammensetzung 20 auf einem Substrat 14 aufgebracht ist. Sie enthält gegenüber UV-Strahlung empfindliche, optisch variable Farbmittel als Sicherheitsmerkmal. Bei dem Sicherheitsmerkmal kann es sich beispielsweise um ein photochromes oder thermochromes Pigment handeln. Die Zusammensetzung umfasst ferner ein polymeres Bindemittel, das die verschiedenen Bestandteile der Zusammensetzung miteinander verklebt und zum anderen ein UV-Strahlung absorbierender Bestandteil der Zusammensetzung ist. Der UV-Absorber ist im Wesentlichen in einer Oberflächenschicht 18 der Zusammensetzung 20 enthalten, während die übrigen Bestandteile der erfindungsgemäßen Zusammensetzung im Wesentlichen in der unter der Oberflächenschicht 18 angeordneten Schicht 16 enthalten sind (siehe Fig. 2).

Eine beispielhafte Zusammensetzung für die in der Ausführungsform gemäß Fig. 2 gezeigte Oberflächenschicht 18 mit UV-Absorber ist nachfolgend angeführt:

| | | |
|---|---|---|
| - | Polyvinylbutyraldispersion mit | |
| | 50 % Festkörpergehalt (Butvar FP) | 55 Gew.-% |
| - | Acrylatdispersion mit 40 % Festkörpergehalt | 40 Gew.-% |
| - | Verdickungsmittel | 5 Gew.-% |

Die so erhaltene wässrige Zusammensetzung wurde auf eine die optisch variablen Pigmente enthaltende Schicht 16 aufgebracht, welche ihrerseits auf einem Substrat 14 aufgedruckt wurde. Vor der Aufbringung der Oberflächenschicht 18, z.B. in einem Siebdruckverfahren, wurde die Schicht 16 gehärtet.

Es versteht sich, dass die PVB enthaltende Oberflächenschicht 18 neben dem hier erwähnten Siebdruckverfahren auch in einem Tiefdruck-, Flexo- oder Offsetdruckverfahren aufgebracht werden kann. Gegebenenfalls muss die vorstehend genannte beispielhafte Zusammensetzung dem jeweiligen Druckverfahren angepasst werden.

Um die vorteilhafte Wirkung der erfindungsgemäßen Zusammensetzung 20 gemäß Fig. 2 zu demonstrieren, wurde zu Vergleichszwecken eine ansonsten identische Zusammensetzung 16 auf ein Substrat 14 aufgebracht, jedoch keine PVB enthaltende Oberflächenschicht 18 über der Schicht 16 aufgedruckt.

Die Lichtechtheit einer Zusammensetzung kann beispielsweise im sogenannten "Xenon-Test" bestimmt werden (zu der Methode Wollskala, Stufe 1 bis Stufe 8, siehe "http://de.wikipedia.org/wiki/Wollskala"). Bei diesem Test wird Tageslicht simuliert, das auch gewisse Anteile unsichtbarer UV-Strahlung enthält, insbesondere UV-Strahlung mit einer Wellenlänge kleiner 380 nm. Einzelheiten zum Test können der technischen Mitteilung LX-5060 der Q-Panel Lab Products entnommen werden (http://www.q-lab.eu/EN_Weblit/Q-Sun-LX-5060_web.pdf).

Nach der Bestrahlung des Vergleichsmusters und des erfindungsgemäßen Sicherheitselements mit UV-Strahlung einer Strahlungsdichte von 60 mJ/cm² mittels eines Quecksilber-Hochdruckstrahlers, zeigt das ehemals optisch variable Farbmittel des Sicherheitselements des Vergleichsmusters deutlich reduzierte optisch variable Eigenschaften. D.h., das optisch variable Farbmittel wurde durch die Beaufschlagung mit UV-Licht zumindest teilweise irreversibel zerstört.

Bei der erfindungsgemäßen Zusammensetzung 20, die eine Oberflächenschicht 18 mit PVB als UV-Absorber aufweist, zeigt das optisch variable Pigment unverändert optisch variable Effekte, wie dies vor der Beaufschlagung mit UV-Strahlung der Fall war.

Das Beispiel demonstriert, dass der erfindungsgemäße Einsatz eines polymeren Bindemittels als UV-Absorber die Funktionalität, in diesem Fall den optisch variablen Effekt, von Farbmitteln aufrechterhalten kann.

Des Weiteren kann durch die Aufbringung der Oberflächenschicht 18 in Form eines Musters, Logos etc. auf eine ein optisch variables Farbmittel enthaltende Schicht 16 und eine anschließende Beaufschlagung mit UV-Strahlung auch eine Information in Form eines Logos, Musters etc. in ein Sicherheitselement eingebracht werden. Ein solches Sicherheitselement weist demnach Bereiche mit optisch variablen Eigenschaften des Farbmittels und Bereiche auf, in denen keine optisch variablen Eigenschaften des Farbmittels mehr vorhanden sind.

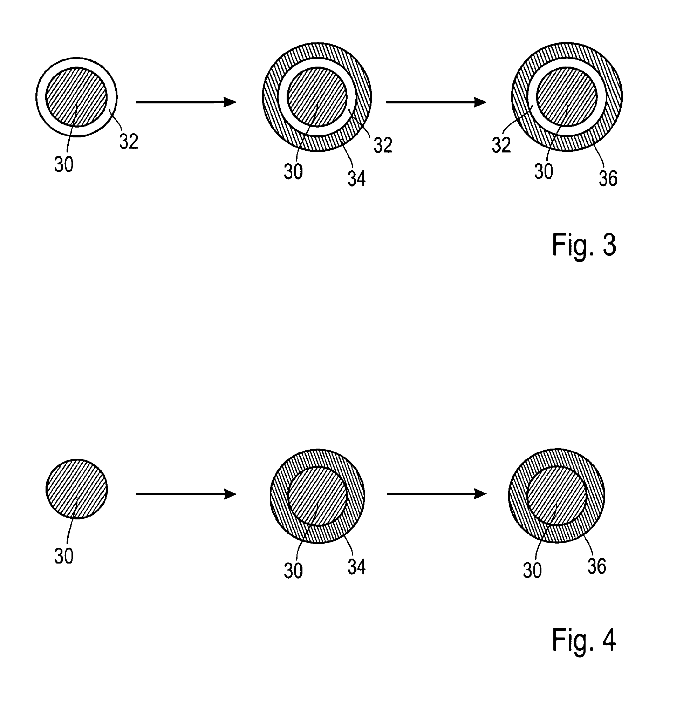

Fig. 3 zeigt eine weitere Variante der Erfindung, bei der der UV-Absorber als Hülle eines Kern-Hülle-Teilchens um das als Kern ausgebildete, optisch variable Farbmittel angeordnet ist. Bei dieser Ausführungsform wird das optisch variable Farbmittel somit durch den in der Hülle vorgesehenen UV-Absorber geschützt. Eine Vielzahl solcher Kern-Hülle-Teilchen ist in einer erfindungsgemäßen Zusammensetzung enthalten.

Wie in Fig. 3 gezeigt, kann ein optisch variables Pigment, beispielsweise ein thermochromes oder photochromes Pigment, als Kern 30 mit einem Funktionsmaterial 32, insbesondere Gelatine oder Melaminharz, umhüllt werden. Die so erhaltenen Mikrokapseln werden dann noch mit einem polymeren Bindemittel als UV-Absorber verkapselt. Dazu kann der UV-Absorber, wie in Fig. 3 gezeigt, in einem zweistufigen Verfahren als Bestandteil der Hülle der Kern-Hülle-Teilchen hergestellt werden. In einem ersten Schritt werden die aus Kern 30 und Funktionsmaterial 32 bestehenden Mikrokapseln mit einer Hülle aus Polyvinylalkohol (PVA) 34 versehen und die so erhaltenen Mikrokapseln mit einem Aldehyd, z.B. Butanal, zur Reaktion gebracht, so dass durch eine bevorzugt säurekatalysierte polymeranaloge Reaktion eine Hülle 36 um die Schicht 32 und das im Kern 30 enthaltene optisch variable Farbmittel erhalten wird. Beispielsweise wird bei der Verwendung einer PVA-Schicht 34 und Butanal als Aldehyd eine PVB aufweisende Hülle 36 erhalten. Die so hergestellten Kern-Hülle-Teilchen mit UV-Absorber in der Hülle 36 werden zur Herstellung einer z.B. druckfähigen Zusammensetzung mit weiteren Inhaltsstoffen vermischt.

In einer in Fig. 4 gezeigten weiteren Variante zur Herstellung der Kern-Hülle-Teilchen für die erfindungsgemäße Zusammensetzung wird auf das Funktionsmaterial 32 verzichtet und das optisch variable Farbmittel des Kerns 30 direkt mit einer Schicht aus PVA umgeben. In einem weiteren Schritt wird durch Umsetzung der PVA-Hülle mit einem geeigneten Aldehyd, insbesondere Butanal, der UV-Absorber, insbesondere PVB, in der den Kern umhüllenden Schicht 36 erhalten.

In einer noch weiteren Variante kann die Hülle 36 mit UV-Absorber auch durch direkte Verkapselung des optisch variablen Farbmittels erhalten werden, was das in Fig. 4 gezeigte Verfahren zur Herstellung der Kern-Hülle-Teilchen weiter vereinfacht.

Entsprechend ist es bei dem in Fig. 3 gezeigten Mikrokapseln aus Kern 30 und Funktionsmaterial 32 auch möglich, die den UV-Absorber enthaltende Schicht 36 direkt als Hülle aufzubringen, d.h. die in Fig. 3 gezeigte In-situ-Herstellung des UV-Absorbers aus PVA und einem Aldehyd weiter zu vereinfachen.

Durch die in Fig. 3 und Fig. 4 gezeigte In-situ-Herstellung der die UV-Absorber enthaltenden Hülle und für die nicht weiter dargestellte direkte Verkapselung der Mikrokapseln 30, 32 (Fig. 3) bzw. des Kerns 30 (Fig. 4) mit einer den UV-Absorber enthaltenden Hülle wird eine sehr hohe Lichtechtheit der optisch variablen Farbmittel und der daraus hergestellten Zusammensetzungen, Sicherheitselemente bzw. Wertdokumente gewährleistet.

Bei der direkten Verkapselung mit einer den UV-Absorber enthaltenden Schicht kann ein aus dem Stand der Technik bekanntes pH-Wert-gesteuertes

Verfahren eingesetzt werden. Dies wird nachfolgend für PVB als UV-Absorber erläutert:
7,5 g einer Polyvinylbutyraldispersion mit 50 % Festkörpergehalt (Butvar FP) wird mit 3 Teilen Wasser verdünnt. Der pH-Wert liegt oberhalb von 8. Diese Dispersion wird langsam in eine Vorlage, bestehend aus
7,5 g mikroverkapseltem Pigment und
60 g Wasser
gegeben. Der pH-Wert der Dispersion ist kleiner 7. Die Zugabe erfolgt tropfenweise unter Rühren. Nach vollständiger Zugabe wird noch 30 Minuten weitergerührt und dann der pH-Wert auf das für die Bindemittelformulierung benötigte Niveau eingestellt. Zur Härtung der Hülle der Mikrokapseln ist es möglich, diese mit einem Carbodiimid zu aktivieren und dann mit einem Amin reagieren zu lassen.

Auch kann ein eingesetztes kommerziell erhältliches PVB, welches in der Regel freie OH-Gruppen aufweist, durch geeignete Substanzen modifiziert werden, um die Eigenschaften als UV-Absorber weiter zu erhöhen bzw. in Varianten mit im Wesentlichen homogener Verteilung des Bindemittels in der Zusammensetzung die Bindemittelkompatibilität zu den Inhaltsstoffen der Zusammensetzung zu verbessern.

Generell ist noch anzumerken, dass Kern-Hülle-Teilchen mit einem in der Hülle vorgesehenen UV-Absorber den großen Vorteil aufweisen, dass sie auch in Zusammensetzungen verwendet werden können, in denen die Verwendung von UV-Absorbern als im Wesentlichen homogener Mischungsbestandteil nicht möglich ist. Dies wäre z.B. bei UV-härtenden Druckzusammensetzungen der Fall, da dann der UV-Absorber mit dem für die Härtung erforderlichen Photoinitiator in der Zusammensetzung konkurrieren würde. Die Folge wäre eine mangelhafte Aushärtung der Zusammensetzung.

Gemäß einem weiteren Ausführungsbeispiel wird eine erfindungsgemäße Zusammensetzung hergestellt, bei der der UV-Strahlung absorbierende Bestandteil in im Wesentlichen homogener Verteilung in der Zusammensetzung enthalten ist. Dazu wurde eine erfindungsgemäße Zusammensetzung mit einem thermochromen Flüssigkristallpigment, einem wässerigen Dispersionsbindemittel und einer wässerigen PVB-Suspension hergestellt. Für die Zusammensetzung wurde folgende Rezeptur verwendet:
- Acrylatdispersion mit 40 % Festkörpergehalt: 40 Gew.-%
- PVB-Dispersion mit 50 % Festkörpergehalt (UTVAR-FP): 40 Gew.-%
- Flüssigkristallpigment: 15 Gew.-%
- Verdickungsmittel: 5 Gew.-%.

Zu Vergleichszwecken wurde des Weiteren eine konventionelle Zusammensetzung nach folgender Rezeptur hergestellt:
- Acrylatdispersion mit 40 % Festkörpergehalt: 80 Gew.-%
- Flüssigkristallpigment: 15 Gew.-%
- Verdickungsmittel: 5 Gew.-%.

Die erfindungsgemäße Zusammensetzung und die konventionelle Zusammensetzung wurden in einem Siebdruckverfahren auf ein Substrat aufgebracht und nach dem Trocknen mit einem undotierten Quecksilber-Hochdruckstrahler (Firma IST) bestrahlt. Die Strahlungsdichte betrug 70 mJ/cm². Die bestrahlten Teile der konventionellen Zusammensetzung zeigten eine deutliche Veränderung des optisch variablen Effekts des Farbmittels, während der optisch variable Effekt der erfindungsgemäßen Zusammensetzung keine Beeinträchtigung durch die Bestrahlung aufwies.

## Patentansprüche

1. Verwendung eines polymeren Bindemittels als ultraviolette (UV) Strahlung absorbierender Bestandteil in einer Zusammensetzung, die gegenüber UV-Strahlung empfindliche, optisch variable Farbmittel als Sicherheitsmerkmal aufweist.

2. Verwendung nach Anspruch 1, bei der der UV-Strahlung absorbierende Bestandteil ausgewählt ist aus Polyvinylbutyral (PVB) oder Polyvinylacetalen, bevorzugt den aromatischen Polyvinylacetalen, insbesondere Phenylacetaldehyd.

3. Verwendung nach Anspruch 1 oder 2, bei der der Anteil des UV-Strahlung absorbierenden Bestandteils in der Zusammensetzung 5 Gew.-% bis 95 Gew.-%, bevorzugt 20 Gew.-% bis 80 Gew.-%, besonders bevorzugt 35 Gew.-% bis 55 Gew.-%, beträgt.

4. Verwendung nach wenigstens einem der Ansprüche 1 bis 3, bei der das gegenüber UV-Strahlung empfindliche, optisch variable Farbmittel ausgewählt ist aus der Gruppe der optisch variablen Farbstoffe oder der optisch variablen Pigmente, insbesondere der thermochromen, photochromen Pigmente oder Fluoreszenzpigmente.

5. Zusammensetzung, umfassend ein gegenüber ultravioletter (UV) Strahlung empfindliches, optisch variables Farbmittel als Sicherheitsmerkmal und ein polymeres Bindemittel, **dadurch gekennzeichnet, dass** das polymere Bindemittel ein UV-Strahlung absorbierender Bestandteil ist.

6. Zusammensetzung nach Anspruch 5, **dadurch gekennzeichnet, dass** der UV-Strahlung absorbierende Bestandteil ausgewählt ist aus Polyvinylbutyral (PVB) oder Polyvinylacetalen, bevorzugt den aromatischen Polyvinylacetalen, insbesondere Phenylacetaldehyd.

7. Zusammensetzung nach Anspruch 5 oder 6, **dadurch gekennzeichnet, dass** der Anteil des UV-Strahlung absorbierenden Bestandteils 5 Gew.-% bis 95 Gew.-%, bevorzugt 20 Gew.-% bis 80 Gew.-%, besonders bevorzugt 35 Gew.-% bis 55 Gew.-%, beträgt.

8. Zusammensetzung nach wenigstens einem der Ansprüche 5 bis 7, **dadurch gekennzeichnet, dass** das gegenüber UV-Strahlung empfindliche, optisch variable Farbmittel ausgewählt ist aus der Gruppe der optisch variablen Farbstoffe oder der optisch variablen Pigmente, insbesondere der thermochromen, photochromen Pigmente oder Fluoreszenzpigmente.

9. Zusammensetzung nach wenigstens einem der Ansprüche 5 bis 8, **dadurch gekennzeichnet, dass** sie den UV-Strahlung absorbierenden Bestandteil in im Wesentlichen homogener Verteilung aufweist.

10. Zusammensetzung nach wenigstens einem der Ansprüche 5 bis 8, **dadurch gekennzeichnet, dass** sie den UV-Strahlung absorbierenden Bestandteil in einer die optisch variablen Farbmittel umhüllenden Hülle einer Vielzahl von Kern-Hülle-Teilchen aufweist.

11. Verfahren zur Herstellung einer Zusammensetzung mit einer Vielzahl von Kern-Hülle-Teilchen nach 10, bei dem
- zur Bildung der Hülle einer Vielzahl von Kern-Hülle-Teilchen ein gegenüber ultravioletter (UV) Strahlung empfindliches, optisch variables Farbmittel mit einem Material umhüllt wird, das ein polymeres Bindemittel, bevorzugt ausgewählt aus Polyvinylbutyral (PVB) oder Polyvinylacetalen, als einen UV-Strahlung absorbierenden Bestandteil aufweist, und
- die Zusammensetzung unter Verwendung der so erhaltenen Kern-Hülle-Teilchen und gegebenenfalls weiterer Inhaltsstoffe hergestellt wird.

12. Verfahren nach Anspruch 11, **dadurch gekennzeichnet, dass** der UV-Strahlung absorbierende Bestandteil der Hülle der Kern-Hülle-Teilchen in-situ hergestellt wird, in dem
- das optisch variable Farbmittel mit einer Polyvinylalkohol (PVA) aufweisenden Hülle umhüllt wird, und
- durch Reaktion des PVA mit einem Aldehyd, bevorzugt Butanal, der UV-Strahlung absorbierende Bestandteil, bevorzugt PVB, in der Hülle der Kern-Hülle-Teilchen gebildet wird.

13. Verfahren nach Anspruch 11 oder 12, **dadurch gekennzeichnet, dass**
- das optisch variable Farbmittel zunächst mit einem Funktionsmaterial, bevorzugt Gelatine oder Melaminharz, umhüllt wird, und
- das Funktionsmaterial anschließend mit dem Material umhüllt wird, das das polymere Bindemittel, als einen UV-Strahlung absorbierenden Bestandteil aufweist.

14. Sicherheitselement oder Wertdokument, insbesondere Banknote, umfassend eine auf einem Substrat angeordnete Zusammensetzung nach einem der Ansprüche 5 bis 10 oder eine nach einem der Ansprüche 11 bis 13 hergestellte Zusammensetzung.

15. Sicherheitselement oder Wertdokument nach Anspruch 14, **dadurch gekennzeichnet, dass der** UV-Strahlung absorbierende Bestandteil der Zusammensetzung zumindest teilweise in einer Oberflächenschicht der Zusammensetzung vorgesehen ist.
